# DEMANDE DE BREVET EUROPEEN

(11) **EP 2 037 383 A1**
(43) Date de publication de la demande: **18.03.2009**
(21) Numéro de dépôt: 07291096.1
(22) Date de dépôt: 13.09.2007
(51) Int. Cl.: G06F 21/00, H04L 9/32

(54) **Procédé de validation électronique d'une transaction en réseau**

(71) Demandeur: Alténor Holding, 75001 Paris (FR)
(72) Inventeur: Ravisé, Thibaut, 75017 Paris (FR)
(74) Mandataire: Bredema

(57) **Abrégé**

L'invention vise à aménager la preuve de l'échange des consentements entre des parties dans le cadre d'une transaction.

Les techniques connues ne permettent pas d'offrir de signature non répudiable du contrat, sans que le client ne soit préalablement identifié.

La présente invention permet de pallier ces inconvénients par une approche qui reprend le mécanisme de la signature papier, par l'utilisation d'une empreinte biométrique combinée à une simultanéité d'apposition de cette empreinte avec la présentation de l'acte.

Pour ce faire, la présente invention prévoit la validation électronique d'une transaction en réseau électronique de type Internet entre un prestataire et un client, par combinaison de trois phases en synchronisme :
- une capture d'une empreinte biométrique d'identification du client,
- une communication interactive à partir du réseau assurant un traitement coordonné et séquencé entre la capture de l'empreinte vocale et son apposition sur le contrat lors de la création du fichier de preuve, et
- une signature électronique d'un contrat électronique fourni par le prestataire et reçu par le client à travers le réseau de type Internet, en scellement d'un lien entre le contrat et le client.

## Description

La présente invention se rapporte à un procédé de validation électronique d'une transaction en réseau, notamment en réseau Internet.

L'invention concerne le domaine contractuel par voie électronique, en particulier dans le cadre de la vente à distance, notamment du e-commerce. Elle permet de finaliser la contractualisation de transactions ou de ventes à distance, en particulier sur Internet.

Actuellement, plusieurs méthodes sont utilisées en vente à distance afin d'aménager la preuve de l'échange des consentements entre les parties, par exemple dans le cadre d'un contrat.

Par courrier postal, le contrat papier est signé de manière manuscrite et renvoyé par la poste. Cet échange sépare dans le temps la conclusion de la vente par le client et la validation du contrat par le prestataire. De plus, il n'est pas fiable : risque d'erreurs dans l'apposition des paraphes et des signatures, possibilité de falsification ou difficulté de la reconnaissance manuscrite.

Par téléphone, le prestataire récupère la preuve du consentement du client par enregistrement vocal en faisant référence au contrat. Cette signature est répudiable du fait de l'absence de lien direct entre l'enregistrement vocal et le contrat, l'enregistrement faisant une simple référence à un document sans en appréhender son contenu. En outre, le processus est effectué en deux temps, l'enregistrement se faisant après la lecture du document contractuel.

Par Internet, le contrat électronique présenté sur l'écran peut être approuvé par un « double clic » de souris, après identification du client (références bancaires, numéro de carte d'identité, envoi d'un courrier électronique de confirmation, etc.). Cette technique du double clic ne formalise pas de signature électronique, c'est-à-dire ne créé pas de lien non répudiable entre le signataire et le contrat.

Alternativement, il est possible d'utiliser des procédés cryptographiques de signature électronique qui lient l'identité du signataire, techniquement représentée par un certificat électronique et le contrat électronique. Cependant, cette possibilité n'est viable que si le client est identifié au préalable de façon sûre et fiable. Si le client n'est pas connu, il est nécessaire de faire appel à un organisme identificateur tiers qui délivrera le certificat électronique.

Les améliorations ne se rapportent qu'à l'utilisation de solutions sécuritaires (interfaces réseau sécurisées, clés privées, etc.). Ces techniques présentent individuellement des risques liés à l'identité de l'utilisateur ou à l'impossibilité d'associer de façon non répudiable un acte avec son signataire.

Pour Internet, il est possible d'utiliser un tiers certificateur de l'identité du client, mais la mise en oeuvre et l'existence de ce tiers, ainsi que l'exhaustivité de la connaissance de l'identité des clients, ne sont pas réalisables dans un temps raisonnable et seraient fort onéreuses.

Ainsi, ces méthodes ne permettent pas d'offrir de signature non répudiable du contrat, sans que le client ne soit préalablement identifié.

La présente invention vise à pallier les inconvénients de l'état de la technique, par une approche qui reprend le mécanisme de la signature papier : utilisation d'une empreinte biométrique, quitte à en vérifier l'authenticité qu'ultérieurement comme pour une signature manuscrite, combinée à une simultanéité d'apposition de cette empreinte avec la présentation de l'acte.

II s'agit alors de créer un lien direct non répudiable entre le signataire et le contrat électronique en utilisant simultanément des technologies associant l'acte et le signataire, en un nombre suffisant pour que cette combinaison soit non répudiable, sans l'intervention d'un tiers certificateur de l'identité.

Plus précisément, la présente invention a pour objet un procédé de validation électronique d'une transaction en réseau électronique de type Internet entre un prestataire et un client, combinant les trois phases suivantes en synchronisme :
- une communication interactive entre le client et un serveur interactif, est initiée par le client;
- une capture d'empreinte biométrique d'identification, en liaison avec une validation d'un code d'identification de la transaction transmis par le client, est apposée sur le contrat si la validation est effective, en vue de la création d'un fichier de preuve;
- une signature électronique d'un contrat électronique fourni par le prestataire et reçu par le client à travers le réseau de type Internet, en scellement d'un lien entre le contrat et le client.

Ainsi, il est garanti que la personne qui a pris connaissance de l'acte par la fourniture de l'identification de la transaction est la personne qui présente l'empreinte biométrique saisie. La signature électronique est alors liée de manière non répudiable à l'acte.

L'utilisation en synchronisme de ces différentes phases permet de garantir que le signataire est bien la personne qui est connectée au réseau et que cette personne a lu le document qu'elle va signer par la fourniture de l'empreinte biométrique intégré dans le fichier de preuve.

Selon des modes de réalisation particuliers :
- l'empreinte biométrique est un fichier voix et/ou un fichier image scellé au contrat dans un fichier de preuve cryptographique ;
- le rappel interactif est réalisé entre le réseau électronique et un réseau téléphonique ;
- un traitement séquentiel de données par couplage entre le réseau électronique et le réseau téléphonique liant temporellement la séquence de temps de la capture de la voix, la séquence de temps de présentation du contrat et la séquence de scellement cryptographique.

L'invention concerne également un système de mise en oeuvre du procédé ci-dessus. Dans ce système, le client dispose au moins d'un terminal, relié au réseau électronique de type Internet et équipé d'un écran sur lequel apparaît le contrat via un site de souscription. Le client dispose également d'un moyen de liaison, avantageusement par téléphonie audio et/ou par imagerie vidéo, afin d'effectuer la communication interactive entre le client et le site de souscription intégrant la double saisie de l'empreinte biométrique et d'un code d'un code d'identification de la transaction.

La capture de l'empreinte vocale de la personne devant l'écran est effectuée via un Serveur Vocal Interactif (SVI) et est restituée instantanément sur le site Internet de souscription du contrat. La communication interactive peut être effectuée directement via le réseau électronique à partir d'un équipement téléphonique.

Selon des modes de réalisation particuliers, le moyen de liaison est un téléphone, portable ou fixe, équipé d'un clavier, permettant de transmettre oralement une phrase inscrite sur l'écran et de taper le code d'identification de la transaction sur le clavier et/ou une caméra ou un appareil photographique numérique de transmission d'une image vidéo sur laquelle apparaissent le client et le code d'identification de la transaction.

Avantageusement, le système comprend au moins une borne reliée à un réseau électronique de type Internet, la borne étant équipée d'un écran d'enregistrement de trace écrite, sur lequel apparaît le contrat via un site de souscription, un protocole d'identification du code de la transaction et l'empreinte biométrique étant fournie par un écrit présenté au client sur l'écran d'enregistrement.

D'autres caractéristiques et avantages de l'invention ressortiront à la lecture qui suit d'un exemple de réalisation détaillée, en référence aux figures qui représentent respectivement :
- la figure 1, un écran d'ordinateur visualisant la page de présentation du processus d'un enregistrement vocal;
- la figure 2, un écran d'ordinateur visualisant le processus d'enregistrement vocal, et
- la figure 3, un écran d'ordinateur visualisant la page de signature.

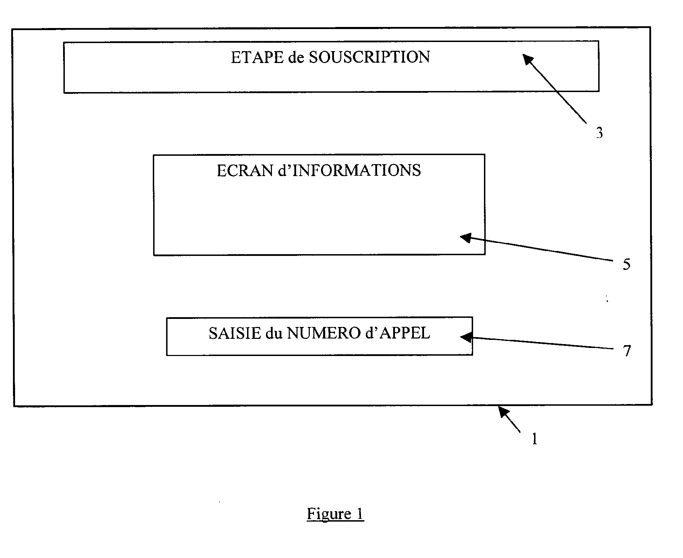

Sur la figure 1, l'écran d'ordinateur 1 contient principalement trois zones de renseignements. La zone 3, nommée étape de souscription, indique que le client est dans la phase de souscription.

La zone 5, nommée écran d'informations, présente au client les différentes étapes du processus de validation :
- choix par le client du numéro de téléphone sur lequel il est joignable immédiatement,
- appel du client par le Serveur vocal Interactif (SVI),
- lecture par le client d'un texte qu'il voit sur l'écran de son ordinateur, et
- validation par le client de son enregistrement vocal.

La zone 7, nommée Téléphone, est à renseigner par le client avec le numéro de téléphone qu'il choisit pour un rappel immédiat.

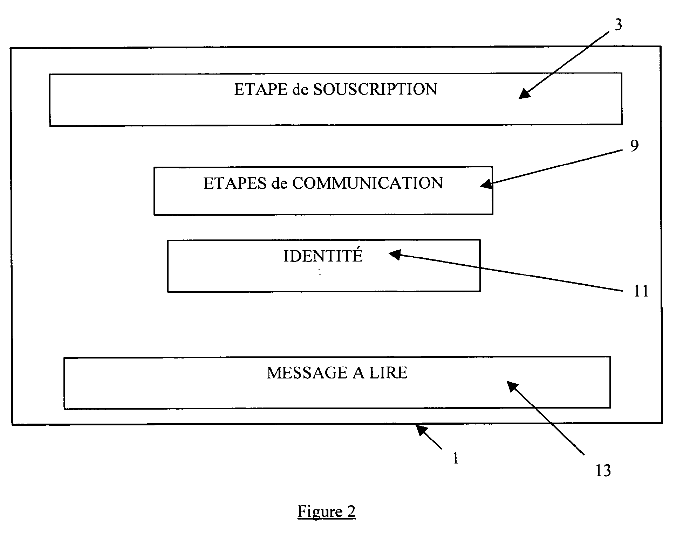

Sur la figure 2, l'écran d'ordinateur est renseigné par le processus informatique au fur et à mesure des actions faites par le client. La zone 3 indique qu'il s'agit d'une phase de souscription, jusqu'au moment où le processus passe à la phase suivante de validation.

Un Serveur Vocal Interactif (SVI) appelle le client au numéro de téléphone précédemment spécifié. La zone 9, nommée étapes de communication, est renseignée au fur et à mesure du déroulement de l'appel du client par le SVI et du décrochage du client.

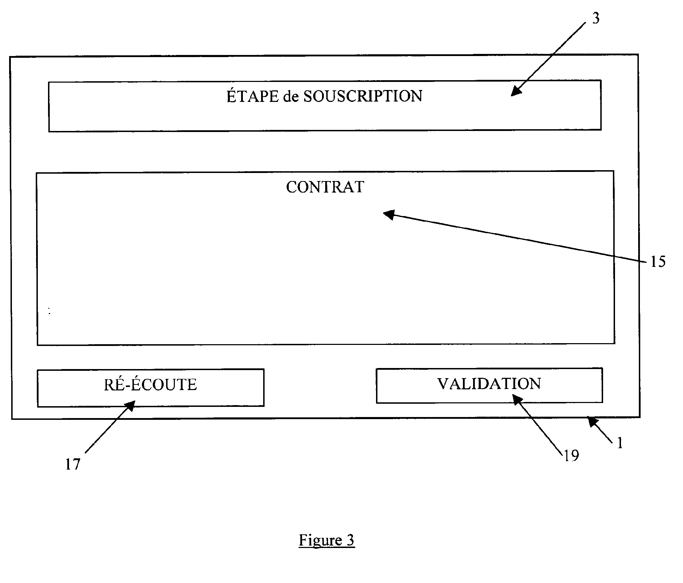

Sur la zone 11, appelée « Identité », un numéro de transaction s'affiche lorsque le téléphone est décroché. Le client est invité à taper sur son téléphone ce numéro de transaction qui apparaît à l'écran. Si le numéro de transaction saisi sur le téléphone est correct, un message à lire à haute voix s'affiche à l'écran en zone 13. Le client lit la phrase qui apparaît à l'écran et son consentement est enregistré. Il valide son enregistrement par téléphone, peut le réécouter ou le modifier. Une fois que l'enregistrement lui convient, il peut le valider et ainsi accéder à la page de signature présentée sur la figure 3.

Dans ces conditions, la saisie du numéro de transaction permet de s'assurer que la personne qui répond au téléphone est bien celle qui est devant son écran d'ordinateur.

Sur la figure 3, l'écran d'ordinateur 1 montre alors le contrat électronique 15, une zone 17 permettant une ré-écoute par le client de son consentement enregistré, et une zone 19 de signature électronique par un clic de validation.

Après signature électronique par le client, un fichier preuve est constitué et stocké. Ce fichier de preuve est un document informatique associé à une transaction et possède une identification unique, composée de plusieurs champs servant de critères d'archivage et de recherche. Sa structure et son stockage doivent permettre sa pérennité dans le temps.

L'invention n'est pas limitée aux exemples de réalisation décrits et représentés. II est également possible de prévoir d'autres moyens dans le traitement séquentiel, le support d'identité utilisé, dans les équipements techniques ou dans les champs et domaines d'application.

Concernant le traitement séquentiel, l'organisation des différentes étapes de la phase d'enregistrement du consentement peut ne pas se dérouler dans le même ordre que celui décrit dans l'exemple de réalisation détaillé. Les séquences peuvent ainsi suivre un tout autre ordre chronologique.

L'exemple de réalisation présenté ci-dessus a pour traitement séquentiel : appel du SVI, saisie du code de transaction, enregistrement vocal, et présentation du document contractuel.

Une possibilité de traitement séquentiel peut être : Appel du SVI, document contractuel, enregistrement vocal et code de transaction. D'autres possibilités peuvent être réalisées en intervertissant l'ordre des étapes.

Une autre variante de traitement séquentiel concerne le numéro de la transaction : dans le cadre de la solution présentée, le code de transaction apparaît à l'écran et le client le tape sur le clavier de son téléphone. Alternativement, le code de transaction peut être dicté par le SVI et le client le tape sur le clavier de son ordinateur.

Par ailleurs, l'identité d'une personne peut être recueillie par la voix, mais aussi par la vidéo, l'image, l'écriture.

Pour plus de sécurité, il est aussi possible de générer des phrases aléatoires à faire lire au client. La phrase lue par le client et enregistrée peut ensuite être modifiée de façon aléatoire pour chaque souscription, afin d'éviter une falsification : un faussaire pourrait en effet reconstituer une phrase type à partir de différents enregistrements d'une victime, et activer l'enregistrement falsifié au moment de la séquence de capture par téléphone.

Dans une application où le client vient signer son contrat dans un lieu dédié au prestataire, par exemple dans une agence, il est possible de prévoir, dans une borne d'accès au contrat, un protocole d'identification par l'écriture. II est en effet possible d'équiper cette borne d'un écran d'enregistrement tactile de trace écrite, par exemple une signature et une phrase. La double empreinte peut alors être constituée par un écrit manuel, comportant une signature manuelle et le code d'identification de la transaction.

Avant la signature électronique, il est possible d'effectuer un contrôle automatique de la cohérence entre le texte enregistré et le texte affiché, ou entre le texte enregistré et son auteur, par exemple en intégrant une information sur la longueur de la phrase ou le sexe de l'auteur. Ceci permet d'accélérer les traitements de réécoute qui peuvent avoir lieu par le prestataire afin de n'enregistrer que les ventes dont les enregistrements sont corrects (en fonction de critères, tels que : phrase lue distinctement, voix masculine pour une civilité déclarée 'masculine'...).

Par ailleurs, l'enregistrement vocal peut être lié au contrat dans un même et unique fichier visualisant tous les éléments de signature, ou bien dans deux fichiers distincts qui seront ensuite scellés dans le même fichier de preuve, pour réécouter son enregistrement et visualiser son contrat sur une même page Web (de la toile Internet). Visualiser tous les éléments de signature au sein d'un même et unique fichier peut être obtenu, par exemple, par l'enregistrement au format MP3 inclus dans le fichier PDF en tant qu'attachement.

L'enregistrement vocal peut être effectué directement ou par transfert et téléchargement de documents : le client transfère ainsi différents formats de fichiers contenant son consentement (audio, vidéo, image de son accord manuscrit...). Le système fonctionne alors en mode asynchrone.

La présente invention permet de sceller cryptographiquement une donnée biométrique avec une information numérique. Cette solution peut aussi être appliquée dans les domaines suivants :
- en droit d'auteur : une photo, une vidéo, une image, un son peuvent être associés à l'identité de l'auteur pour authentifier la date et le créateur ;
- Courriers postaux recommandés : un document est alors lié à l'expéditeur et au destinataire.

## Revendications

1. Procédé de validation électronique d'une transaction en réseau électronique de type Internet entre un prestataire et un client, **caractérisé en ce qu'**il combine trois phases en synchronisme :
- une communication interactive entre le client et un serveur interactif, est initiée par le client ;
- une capture d'empreinte biométrique d'identification, en liaison avec une validation d'un code d'identification de la transaction transmis par le client, est apposée sur le contrat si la validation est effective, en vue de la création d'un fichier de preuve;
- une signature électronique d'un contrat électronique fourni par le prestataire et reçu par le client à travers le réseau de type Internet, en scellement d'un lien entre le contrat et le client.

2. Procédé de validation selon la revendication 1, dans lequel l'empreinte biométrique est un fichier voix et/ou un fichier image scellé au contrat dans le fichier de preuve cryptographique.

3. Procédé de validation selon la revendication 1 ou 2, dans lequel le rappel interactif est réalisé entre le réseau électronique et un réseau téléphonique.

4. Procédé de validation selon la revendication précédente, dans lequel un traitement séquentiel de données par couplage entre le réseau électronique et le réseau téléphonique commuté liant temporellement la séquence de temps de la capture de la voix, la séquence de temps de présentation du contrat et la séquence de scellement crytographique.

5. Système de mise en oeuvre du procédé selon l'une quelconque des revendications précédentes, **caractérisé en ce qu'**il comprend au moins un terminal relié au réseau électronique de type Internet, équipé d'un écran (1) sur lequel apparaît le contrat (15) via un site de souscription, et au moins un moyen de liaison entre le client et le site de souscription par double saisie du code d'identification de la transaction et de l'empreinte biométrique du client pour effectuer la communication interactive.

6. Système selon la revendication 5, dans lequel le moyen de double saisie est un moyen de transmission audio et/ou vidéo.

7. Système selon la revendication précédente, dans lequel la communication interactive peut être effectuée via le réseau électronique à partir d'un équipement téléphonique.

8. Système selon la revendication 5 ou 6, dans lequel la capture de l'empreinte vocale du client est effectuée via un Serveur Vocal Interactif (SVI) et est restituée instantanément sur le site Internet de souscription du contrat.

9. Système selon l'une quelconque des revendications 5 à 8, dans lequel le moyen de liaison est un téléphone, portable ou fixe, équipé d'un clavier, permettant de transmettre oralement une phrase inscrite sur l'écran et de taper le code d'identification de la transaction sur le clavier et/ou une caméra ou un appareil photographique numérique de transmission d'une image vidéo sur laquelle apparaissent le client et le code d'identification de la transaction.

10. Système de mise en oeuvre du procédé selon la revendication 5, **caractérisé en ce qu'**il comprend au moins une borne reliée à un réseau électronique de type Internet, la borne étant équipée d'un écran d'enregistrement de trace écrite, sur lequel apparaît le contrat via un site de souscription, un protocole d'identification du code de la transaction et l'empreinte biométrique étant fournie par un écrit présenté au client sur l'écran d'enregistrement.

## Revendications modifiées

### Revendications modifiées conformément à la règle 137(2) CBE.

1. Procédé de validation électronique d'une transaction en réseau électronique de type Internet entre un prestataire et un client, **caractérisé en ce qu'**il combine trois phases séquentiellement :
- une communication interactive entre le client et le serveur est initié par le client;
- une capture d'empreinte biométrique d'identification validée par le client, après validation par le prestataire d'un code d'identification de la transaction transmis par le client, est apposée sur le contrat si la validation de la capture est effective en vue de la création d'un fichier de preuve ;
- une signature électronique d'un contrat électronique enregistrée dans un fichier de preuve d'un contrat de transaction fourni par le prestataire et reçu par le client à travers le réseau de type Internet, en scellement d'un lien entre le contrat et le client.

2. Procédé de validation selon la revendication 1, dans lequel l'empreinte biométrique est un fichier voix scellé au contrat dans un fichier de preuve cryptographique.

3. Procédé de validation selon la revendication 1 ou 2, dans lequel un rappel interactif de validation du code d'identification est réalisé entre le réseau électronique et un réseau téléphonique commuté.

4. Procédé de validation selon la revendication précédente, dans lequel un traitement séquentiel de données consistant à échanger des informations dans des séquences de temps entre le serveur et le client par couplage successif du réseau électronique et du réseau téléphonique commuté liant successivement dans le temps la séquence de la capture de la voix, la séquence de temps de présentation du contrat et la séquence de scellement crytographique.

5. Système de mise en oeuvre du procédé selon l'une quelconque des revendications précédentes, **caractérisé en ce qu'**il comprend au moins un terminal relié au réseau électronique de type Internet, équipé d'un écran (1) sur lequel apparaît le contrat (15) via un site de souscription, et au moins un moyen de liaison entre le client et le site de souscription tenu par le serveur pour effectuer la communication interactive, ce moyen de liaison comprenant des moyens de double saisie du code d'identification de la transaction et de l'empreinte biométrique du client.

6. Système selon la revendication 5, dans lequel les moyens de double saisie sont des moyens de transmission audio et/ou vidéo.

7. Système selon la revendication précédente, dans lequel la communication interactive est effectuée via le réseau électronique à partir d'un équipement téléphonique dédié.

8. Système selon la revendication 6, dans lequel le moyen de transmission audio réalise la saisie de l'empreinte biométrique par une capture de l'empreinte vocale du client effectuée via un Serveur Vocal Interactif (SVI) et restituée instantanément sur le site Internet de souscription du contrat.

9. Système selon l'une quelconque des revendications 5 à 8, dans lequel le moyen de liaison est un téléphone, portable ou fixe, équipé d'un clavier, permettant de transmettre oralement une phrase inscrite sur l'écran et de taper le code d'identification de la transaction sur le clavier et/ou une caméra ou un appareil photographique numérique de transmission d'une image vidéo sur laquelle apparaissent le client et le code d'identification de la transaction.

10. Système de mise en oeuvre du procédé selon la revendication 5, **caractérisé en ce qu'**il comprend au moins une borne reliée à un réseau électronique du type Internet, la borne étant équipée d'un écran d'enregistrement de trace écrite, sur lequel apparaît le contrat via un site de souscription, un protocole d'identification du code de la transaction et l'empreinte biométrique étant fournie par un écrit présenté au client sur l'écran d'enregistrement.
